(19) Europäisches Patentamt
European Patent Office
Office européen des brevets

(11) EP 1 699 879 B1

(12) **EUROPEAN PATENT SPECIFICATION**

(45) Date of publication and mention of the grant of the patent:
**01.10.2008 Bulletin 2008/40**

(21) Application number: **04815420.7**

(22) Date of filing: **24.12.2004**

(51) Int Cl.:
***C08L 101/00*** *(2006.01)* ***C08K 5/14*** *(2006.01)*
***C08K 5/3435*** *(2006.01)* ***C08G 18/00*** *(2006.01)*

(86) International application number:
**PCT/US2004/043342**

(87) International publication number:
**WO 2005/063895 (14.07.2005 Gazette 2005/28)**

(54) **THERMALLY-REVERSIBLE CROSSLINKING OF POLYMERS**

THERMISCH REVERSIBLE VERNETZUNG VON POLYMEREN

RETICULATION THERMIQUEMENT REVERSIBLE DE POLYMERES

(84) Designated Contracting States:
**AT BE BG CH CY CZ DE DK EE ES FI FR GB GR HU IE IS IT LI LT LU MC NL PL PT RO SE SI SK TR**

(30) Priority: **24.12.2003 US 532491 P**

(43) Date of publication of application:
**13.09.2006 Bulletin 2006/37**

(60) Divisional application:
**08006577.4 / 1 942 152**

(73) Proprietor: **DOW GLOBAL TECHNOLOGIES INC.**
**Midland MI 48674 (US)**

(72) Inventors:
- **CHAUDHARY, BHARAT I.**
**Princeton, NJ 08540 (US)**
- **COSTEUX, Stephane**
**Richwood, TX 77531 (US)**
- **KLIER, John**
**Midland, MI 48642 (US)**
- **PETERSON, Thomas, H.**
**Kennewick, WA 99338 (US)**
- **WASSERMAN, Eric, P.**
**Hopewell, NJ 08525 (US)**

(74) Representative: **Hayes, Adrian Chetwynd et al**
**Boult Wade Tennant,**
**Verulam Gardens**
**70 Gray's Inn Road**
**London WC1X 8BT (GB)**

(56) References cited:
**WO-A-02/092561** **DE-A1- 10 046 024**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 699 879 B1

## Description

FIELD OF THE INVENTION

This invention relates to polymer systems that undergo free radical reactions, wherein introducing a unique free-radical-initiated thermally-reversible crosslink is desirable.

DESCRIPTION OF THE PRIOR ART

A number of polymers can undergo free radical reactions. Some of those reactions are detrimental such as degrading or carbon-carbon crosslinking. While minimizing the impact of the detrimental reactions, there is a need to promote (1) a beneficial coupling reaction (rheology modifying reaction) or (2) a beneficial free-radical-initiated crosslinking reaction in which the composition retains melt processability.

Polyolefins are frequently subjected to nonselective free-radical chemistries. For example, free-radical chemistries at elevated temperatures can degrade the molecular weight, especially in polymers containing tertiary hydrogen such as polypropylene and polystyrene. Additionally, free-radical chemistries can promote carbon-carbon crosslinking, resulting in undesirable gel levels for polyethylene and limited melt processability.

With regard to polypropylene, the free-radical degradation of the polymer may be described as chain scission, lowers the polymer's molecular weight, and increases its melt flow rate. Because scission is not uniform, molecular weight distribution increases as lower molecular weight polymer chains referred to in the art as "tails" are formed.

With regard to polyethylene, the free-radical carbon-carbon coupling or crosslinking bonds yield a polymer with limited melt processability. It is desirable to prepare a crosslinked polymer having improved melt processability.

Without chain scission or carbon-carbon crosslinking the polymer, it is desirable to (1) increase the melt viscosity and melt strength of various polymers by coupling the polymer or (2) crosslink various polymers by introducing a unique free-radical initiated crosslink to retain melt processability. If the polymer is halogenated, it is also desirable that the polymer achieve the desired coupling or crosslinking reaction without dehydrohalogenating the polymer. It is desirable that the unique free-radical initiated bond to be thermally-reversible.

It is also desirable to control the molecular architecture of the polymer as it undergoes the desired reaction.

DE 10046024 discloses a thermo-reversible, crosslinkable elastomer, a composition containing the same, a rubber-bonded body and a rubber structure containing the rubber-bonded body. The thermo-reversible, crosslinkable elastomer has an elastomer main-chain and a crosslinkable portion having at least one group selected from the group consisting of an anhydride group and a hydroxyl group. The thermo-reversible, crosslinkable elastomer can form a stable cross-linked structure at room temperature, thereby having rubber plasticity, show sufficient melt flowability at molding temperature of general thermoplastic resin, and repeatedly reproduce crosslinking formation and crosslinking dissociation.

WO-A-02/092561 discloses a heat stabiliser of organic peroxides characterised in that it contains at least a nitroxyl radical in its molecule. It also discloses a storage-stable and heat-stable organic peroxide composition, the method for preparing same and uses thereof for modifying polymers.

## SUMMARY OF THE INVENTION

The present invention provides a polymeric composition comprising:

(a) a free-radical reactive polymer,
(b) a free-radical inducing species,
(c) a graftable, hindered amine-derived stable organic free radical, having at least one free radical trapping site and a thermally-reversible bond contribution site, and
(d) a complementary, thermally-reversible bond contributor, wherein the stable organic free radical species suppresses degradation of the polymer in the presence of the free-radical inducing species and at a trapping site, being graftable onto the polymer after the polymer forms a free radical.

The present invention further provides a polymeric composition comprising:

(a) a free-radical reactive polymer,
(b) a free-radical inducing species,
(c) a graftable, hindered amine-derived stable organic free radical having at least one free radical trapping site and a thermally-reversible bond contribution site, and
(d) a complementary, thermally-reversible bond contributor, wherein the stable organic free radical suppresses

carbon-carbon crosslinking of the polymer in the presence of the free-radical inducing species and at a trapping site, being graftable onto the polymer after the polymer forms a free radical.

As outlined, the present invention is a rheology-modifiable polymeric composition or a free-radical crosslinkable polymeric composition, wherein the resulting rheology-modifying bond or crosslinking bond is a thermally-reversible bond. The resulting polymer is prepared from at least one polymer which upon forming free radicals preferentially degrades or carbon-carbon crosslinks. The present invention permits suppression of the preferential reaction while permitting the polymer to be coupled or crosslinked through a thermally-reversible bond. Suppressing the undesirable degradation or carbon-carbon crosslinking reaction and permitting the desirable reaction yield a rheology-modified polymer or a free-radical thermally-reversibly crosslinked polymer.

The present invention is useful in wire-and-cable, footwear, film (e.g. greenhouse, shrink, and elastic), engineering thermoplastic, highly-filled, flame retardant, reactive compounding, thermoplastic elastomer, thermoplastic vulcanizate, automotive, vulcanized rubber replacement construction, automotive, furniture, foam, wetting, adhesive, paintable substrate, dyeable polyolefin, moisture-cure, nanocomposite, compatibilizing, wax, calendared sheet, medical, dispersion, coextrusion, cement/plastic reinforcement, food packaging, non-woven, paper-modification, multilayer container, sporting good, oriented structure, and surface treatment applications.

## BRIEF DESCRIPTION OF DRAWING

Figure 1 shows the temperature-dependent dynamic modulus of a composition of the present invention and comparative examples.

Figure 2 shows the melt viscosities modulus of a composition of the present invention and a comparative example.

Figure 3 shows a graph of the dielectric constant over a temperature range of a composition of the present invention and comparative examples.

Figure 4 shows a graph of the dissipation factor over a temperature range of a composition of the present invention and comparative examples.

Figure 5 shows the melt viscosities modulus of two compositions according to the present invention and a comparative example.

## DESCRIPTION OF THE INVENTION

"FRTS-Thermally-Reversible-Functional Group Bond," as used herein, means a covalent bond formed between a free-radical trapping species and a thermally-reversible functional group contributor. Prior to formation of the FRTS-thermally-reversible-functional group bond, the free-radical trapping species has at least one trapping site and a thermally-reversible bond contribution site. At a trapping site, the free-radical trapping species can be grafted to a polymer molecule. At the thermally-reversible bond contribution site, the free-radical trapping species is covalently bond to a thermally-reversible bond contributor to form a thermally-reversible bond.

The FRTS-Thermally-Reversible-Functional Group Bond" can be part of the following bonds: (1) carbon-FRTS-Thermally-Reversible-Functional Bond Contributor-carbon bonds and (2) carbon-FRTS-Thermally-Reversible-Functional Group-FRTS-carbon bonds. Other examples of bonds would be readily apparent to the person skilled in the art. Notably, there may be more than one thermally-reversible-functional group in a chain and the multiple thermally-reversible-functional groups may have different chemical structures (that is, the groups can be different types).

"Constrained geometry catalyst catalyzed polymer", "CGC-catalyzed polymer" or similar term, as used herein, means any polymer that is made in the presence of a constrained geometry catalyst. "Constrained geometry catalyst" or "CGC," as used herein, has the same meaning as this term is defined and described in U.S. Patent Nos. 5,272,236 and 5,278,272.

"Long Chain Branching (LCB)," as used herein, means, for example, with ethylene/alpha-olefin copolymers, a chain length longer than the short chain branch that results from the incorporation of the alpha-olefin(s) into the polymer backbone. Each long chain branch has the same comonomer distribution as the polymer backbone and can be as long as the polymer backbone to which it is attached.

"Melt Processable," as used herein, means the polymer although being crosslinked in the solid state retains a thermoplastic behavior in the melt state as characterized by the polymer being able to flow in a viscous manner such that the polymer could be processed in conventional processing equipment such as extruders and shaping dies.

"Melt Strength," as used herein, means the maximum tensile force at break or at the onset of draw resonance. Melt strength is measured used a capillary rheometer commercially available from Instron Corporation coupled with a melt strength tester commercially available from Gottfert Inc. The capillary rheometer is used to deliver a polymer melt

through a die at a constant throughput rate. The melt strength tester is used to uniaxially stretch the molten polymer filament using nip rolls with an acceleration of 2.4 mm/sec$^2$. The required tensile force is recorded as a function of the take-up speed of the nip rolls of the melt strength tester. The capillary rheometer is fitted with a 2.1 mm diameter, 20:1 die with an entrance angle of approximately 45 degrees. After equilibrating the test specimen at 190 degrees Celsius for 10 minutes, the piston was run at a speed of 2.54 cm (1 inch) minute.

"Metallocene," as used herein, means a metal-containing compound having at least one substituted or unsubstituted cyclopentadienyl group bound to the metal. "Metallocene-catalyzed polymer" or similar term means any polymer that is made in the presence of a metallocene catalyst.

"Polydisperity", "molecular weight distribution", and similar terms, as used herein, means a ratio ($M_w/M_n$) of weight average molecular weight ($M_w$) to number average molecular weight ($M_n$).

"Polymer," as used herein, means a macromolecular compound prepared by polymerizing monomers of the same or different type. "Polymer" includes homopolymers, copolymers, terpolymers, interpolymers, and so on. The term "interpolymer" means a polymer prepared by the polymerization of at least two types of monomers or comonomers. It includes, but is not limited to, copolymers (which usually refers to polymers prepared from two different types of monomers or comonomers, although it is often used interchangeably with "interpolymer" to refer to polymers made from three or more different types of monomers or comonomers), terpolymers (which usually refers to polymers prepared from three different types of monomers or comonomers), tetrapolymers (which usually refers to polymers prepared from four different types of monomers or comonomers). The terms "monomer" or "comonomer" are used interchangeably, and they refer to any compound with a polymerizable moiety which is added to a reactor in order to produce a polymer. In those instances in which a polymer is described as comprising one or more monomers, e.g., a polymer comprising propylene and ethylene, the polymer, of course, comprises units derived from the monomers, e.g., $-CH_2-CH_2-$, and not the monomer itself, e.g., $CH_2=CH_2$.

"P/E" copolymer" and similar terms, as used herein, means a propylene/unsaturated comonomer copolymer characterized as having at least one of the following properties: (i) $^{13}C$ NMR peaks corresponding to a regio-error at about 14.6 and about 15.7 ppm, the peaks of about equal intensity and (ii) a differential scanning calorimetry (DSC) curve with a $T_{me}$ that remains essentially the same and a $T_{peak}$ that decreases as the amount of comonomer, i.e., the units derived from ethylene and/or the unsaturated comonomer(s), in the copolymer is increased. "$T_{me}$" means the temperature at which the melting ends. "$T_{peak}$" means the peak melting temperature. Typically, the copolymers of this embodiment are characterized by both of these properties. Each of these properties and their respective measurements are described in detail in United States Patent Application Serial No. 10/139,786, filed May 5, 2002 (WO2003040442).

These copolymers can be further characterized further as also having a skewness index, $S_{ix}$, greater than -1.20. The skewness index is calculated from data obtained from temperature-rising elution fractionation (TREF). The data is expressed as a normalized plot of weight fraction as a function of elution temperature. The molar content of isotactic propylene units that primarily determines the elution temperature.

A prominent characteristic of the shape of the curve is the tailing at lower elution temperature compared to the sharpness or steepness of the curve at the higher elution temperatures. A statistic that reflects this type of asymmetry is skewness. Equation 1 mathematically represents the skewness index, $S_{ix}$, as a measure of this asymmetry.

$$S_{ix} = \frac{\sqrt[3]{\sum w_i * (T_i - T_{Max})^3}}{\sqrt{\sum w_i * (T_i - T_{Max})^2}}$$

**Equation 1.**

The value, $T_{max}$, is defined as the temperature of the largest weight fraction eluting between 50 and 90 degrees C in the TREF curve. $T_i$ and $w_i$ are the elution temperature and weight fraction respectively of an arbitrary, $i^{th}$ fraction in the TREF distribution. The distributions have been normalized (the sum of the $w_i$ equals 100%) with respect to the total area of the curve eluting above 30 degrees C. Thus, the index reflects only the shape of the crystallized polymer. Any uncrystallized polymer (polymer still in solution at or below 30 degrees C) is omitted from the calculation shown in Equation 1.

The unsaturated comonomers for P/E* copolymers include $C_{4-20}$ $\alpha$-olefins, especially $C_{4-12}$ $\alpha$-olefins such as 1-butene, 1-pentene, 1-hexene, 4-methyl-1-pentene, 1-heptene, 1-octene, 1-decene, 1-dodecene ; $C_{4-20}$ diolefins, preferably 1,3-butadiene, 1,3-pentadiene, norbornadiene, 5-ethylidene-2-norbornene (ENB) and dicyclopentadiene; $C_{8-40}$ vinyl aromatic compounds including sytrene, o-, m-, and p-methylstyrene, divinylbenzene, vinylbiphenyl, vinylnapthalene; and halogen-substituted $C_{8-40}$ vinyl aromatic compounds such as chlorostyrene and fluorostyrene. Ethylene and the $C_{4-12}$ $\alpha$-olefins are the preferred comonomers, and ethylene is an especially preferred comonomer.

P/E* copolymers are a unique subset of P/E copolymers. P/E copolymers include all copolymers of propylene

and an unsaturated comonomer, not just P/E* copolymers. P/E copolymers other than P/E* copolymers include metallocene-catalyzed copolymers, constrained geometry catalyst catalyzed copolymers, and Z-N-catalyzed copolymers. For purposes of this invention, P/E copolymers comprise 50 weight percent or more propylene while EP (ethylene-propylene) copolymers comprise 51 weight percent or more ethylene. As here used, "comprise ... propylene", "comprise ... ethylene" and similar terms mean that the polymer comprises units derived from propylene, ethylene as opposed to the compounds themselves.

"Propylene homopolymer" and similar terms mean a polymer consisting solely or essentially all of units derived from propylene. "Polypropylene copolymer" and similar terms mean a polymer comprising units derived from propylene and ethylene and/or one or more unsaturated comonomers.

"Rheology Modified," as used herein, means change in melt viscosity of a polymer as determined by dynamic mechanical spectroscopy (DMS). The change of melt viscosity is evaluated for high shear viscosity measured at a shear of 100 rad/sec and for low shear viscosity measured at a shear of 0.1 rad/sec.

The rheology of a polymer is desirably modified according to the present invention such that the melt strength increases while maintaining about the same high shear viscosity. That is, the rheology-modified polymer exhibits more resistance to stretching during elongation of molten polymer at low shear conditions but does not sacrifice the output at high shear conditions when compared with its base polymer. In the present invention, it is desirable that the viscosity at the low shear conditions increases by at least 5 percent above the base polymer. An increase in melt strength is typically observed when long chain branches or similar structures are introduced into a polymer.

Alternatively, the rheology of a polymer modified according to the present invention may be described with reference to the ratio of the low shear viscosity versus the high shear viscosity ("low/high shear viscosity ratio"). In particular, a theology-modified polymer of the present invention may be characterized as having a low/high shear viscosity ratio greater than the low/high shear viscosity ratio of its base polymer. Preferably, the low/high shear viscosity ratio is increased by at least 5 percent, more preferably by at least 10%, and even more preferably by at least 20%. Also, preferably, the low/high shear viscosity ratio is increased while maintaining or decreasing the high shear viscosity. More preferably, the low/high shear viscosity ratio is increased while maintaining a comparable high shear viscosity. An increase in the low/high shear viscosity ratio is typically observed when long chain branches or similar structures are introduced into a polymer.

Alternatively and also preferably, without regard to whether a rheology-modified polymer is characterized by its melt strength or its low/high shear viscosity ratio, the resulting rheology-modified polymer will have a gel content as measured by cyclohexane extraction (ASTM 2765) of less than 10 weight percent, more preferably less than 5 weight percent. Also preferably, the gel content of the rheology-modified polymer will be less than an absolute 5 weight percent greater than the gel content of the base polymer (the unmodified polymer).

Crosslinked polymer will have a gel content (ASTM ?) as measured by cyclohexane extraction of 10 weight percent or greater, preferably 30 weight percent or greater, and more preferably 50 weight percent or greater. Preferably the gel content of crosslinked polymer as measured by cyclohexane extraction (ASTM 2765) is at least 5 weight percent greater that the gel consent of the base polymer.

"Thermally-Reversible Bond" or "Thermally-Reversible Functional Group," as used herein, means a chemical link between two functional groups that results from a temperature-dependent equilibrium-based chemical reaction wherein the chemical link forms at low temperatures but is reversibly driven to disruption as the temperature is increased. Examples of thermally-reversible functional groups include urethanes, ureas, azlactones, maleimide-furan diels alder adducts, and other diels alder adducts.

"Thermally-Reversible Bond Contributor," as used herein, means a compound having (a) at least one functional group which covalent bonds to a functional group of a second compound so that the resulting covalent bond is a thermally-reversible bond ("a thermally-reversible bond contribution site") and (b) optionally, a carbon bonding site. For example, 4-hydroxy TEMPO and methylene diphenyl diisocyanate are complementary, thermally-reversible bond contributors to form a thermally-reversible urethane bond. The 4-hydroxy TEMPO contributes a hydroxyl group while the methylene diphenyl diisocyanate contributes an isocyanate group. Notably, the 4-hydroxy TEMPO is also an example of a free radical trapping species that has at least one trapping site (that is, a carbon bonding site) and that has thermally-reversible bond contribution site. The methylene diphenyl diisocyanate has two functional groups which can serve as thermally-reversible bond contribution sites. Depending upon its number of thermally-reversible bond contribution sites, a thermally-reversible bond contributor can bond to other contributors to form additional thermally-reversible bonds.

"Ziegler-Natta-catalyzed polymer," "Z-N-catalyzed polymer," or similar term means any polymer that is made in the presence of a Ziegler-Natta catalyst.

In one embodiment, the present invention is a rheology-modifiable polymeric composition or a free-radical crosslinkable polymeric composition, which comprises a free-radical reactive polymer, a free-radical inducing species, a free radical trapping species having at least one trapping site and a thermally-reversible bond contribution site, and a complementary, thermally-reversible bond contributor. The polymer is capable of forming free radicals when induced by the free-radical inducing species.

Free-radical reactive polymers include free-radical degradable polymers and free-radical crosslinkable polymers. When the free-radical reactive polymer is a free-radical degradable polymer, the polymer undergoes a degradation reaction in the absence of a free radical trapping species and when induced by the free-radical inducing species. The degradation reaction can be chain scission or dehydrohalogenation. The free-radical trapping species substantially suppresses the degradation reaction and is graftable onto the polymer after the polymer forms a free radical. With the thermally-reversible bond contribution site, the free-radical trapping species can react with the complementary, thermally-reversible bond contributor to form a thermally-reversible bond.

When the free-radical reactive polymer is a free-radical crosslinkable polymer, the polymer undergoes a carbon-carbon crosslinking reaction in the absence of a free radical trapping species and when induced by the free-radical inducing species. The free radical trapping species substantially suppresses the carbon-carbon crosslinking reaction and is graftable onto the polymer after the polymer forms a free radical.

A variety of free-radical degradable polymers is useful in the present invention as the polymer. The free-radical degradable polymer can be hydrocarbon-based. Suitable free-radical degradable, hydrocarbon-based polymers include butyl rubber, polyacrylate rubber, polyisobutene, propylene homopolymers, propylene copolymers, styrene/ butadiene/ styrene block copolymers, styrene/ ethylene/ butadiene/ styrene copolymers, polymers of vinyl aromatic monomers, vinyl chloride polymers, and blends thereof.

Preferably, the free-radical degradable, hydrocarbon-based polymer is selected from the group consisting of isobutene, propylene, and styrene polymers.

Preferably, the butyl rubber of the present invention is a copolymer of isobutylene and isoprene. The isoprene is typically used in an amount between 1.0 weight percent and 3.0 weight percent.

Examples of propylene polymers useful in the present invention include propylene homopolymers and P/E copolymers. In particular, these propylene polymers include polypropylene elastomers. The propylene polymers can be made by any process and can be made by Zeigler-Natta, CGC, metallocene, and nonmetallocene, metal-centered, heteroaryl ligand catalysis.

Useful propylene copolymers include random, block and graft copolymers. Exemplary propylene copolymers include Exxon-Mobil VISTAMAX, Mitsui TAFMER, and VERSIFY™ by The Dow Chemical Company. The density of these copolymers is typically at least 0.850, preferably at least 0.860 and more preferably at least 0.865, grams per cubic centimeter (g/$cm^3$).

Typically, the maximum density of these propylene copolymers is about 0.915, preferably the maximum is about 0.900 and more preferably the maximum is about 0.890 g/$cm^3$. The weight average molecular weight (Mw) of these propylene copolymers can vary widely, but typically it is between 10,000 and 1,000,000. The polydispersity of these copolymers is typically between 2 and 4.

These propylene copolymers typically have a melt flow rate (MFR) of at least 0.01, preferably at least 0.05, and more preferably at least 0.1. The maximum MFR typically does not exceed 2,000, preferably it does not exceed 1000, more preferably it does not exceed 500, further more preferably it does not exceed 80 and most preferably it does not exceed 50. MFR for copolymers of propylene and ethylene and/or one or more $C_4$-$C_{20}$ $\alpha$-olefins is measured according to ASTM D-1238, condition L (2.16 kg, 230 degrees C).

Styrene/butadiene/styrene block copolymers useful in the present invention are a phase-separated system. Styrene/ethylene/butadiene/styrene copolymers are also useful in the present invention.

Polymers of vinyl aromatic monomers are useful in the present invention. Suitable vinyl aromatic monomers include, but are not limited to, those vinyl aromatic monomers known for use in polymerization processes, such as those described in U.S. Patent Nos. 4,666,987; 4,572,819 and 4,585,825.

Preferably, the monomer is of the formula:

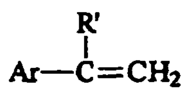

wherein R' is hydrogen or an alkyl radical containing three carbons or less, Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl group. Preferably, Ar is phenyl or alkylphenyl, wherein alkylphenyl refers to an alkyl substituted phenyl group, with phenyl being most preferred. Typical vinyl aromatic monomers which can be used include: styrene, alpha-methylstyrene, all isomers of vinyl toluene, especially paravinyltoluene, all isomers of ethyl styrene, propyl styrene, vinyl biphenyl, vinyl naphthalene, vinyl anthracene , and mixtures thereof.

The vinyl aromatic monomers may also be combined with other copolymerizable monomers. Examples of such monomers include, but are not limited to acrylic monomers such as acrylonitrile, methacrylonitrile, methacrylic acid, methyl methacrylate, acrylic acid, and methyl acrylate; maleimide, phenylmaleimide, and maleic anhydride. In addition,

the polymerization may be conducted in the presence of predissolved elastomer to prepare impact modified, or grafted rubber containing products, examples of which are described in U.S. Patent Nos. 3,123,655, 3,346,520, 3,639,522, and 4,409,369.

The present invention is also applicable to the rigid, matrix or continuous phase polymer of rubber-modified monovinylidene aromatic polymer compositions.

A variety of free-radical carbon-carbon crosslinkable polymers is useful in the present invention as the polymer. The polymer can be hydrocarbon-based. Suitable free-radical carbon-carbon crosslinkable, hydrocarbon-based polymers include acrylonitrite butadiene styrene rubber, chloroprene rubber, chlorosulfonated polyethylene rubber, ethylene/alpha-olefin copolymers, ethylene/diene copolymer, ethylene homopolymers, ethylene/propylene/diene monomers, ethylene/propylene rubbers, ethylene/styrene interpolymers, ethylene/unsaturated ester copolymers, fluoropolymers, halogenated polyethylenes, hydrogenated nitrile butadiene rubber, natural rubber, nitrile rubber, polybutadiene rubber, silicone rubber, styrene/butadiene rubber, styrene/ butadiene/ styrene block copolymers, styrene/ ethylene/ butadiene/ styrene copolymers, and blends thereof.

For the present invention, chloroprene rubbers are generally polymers of 2-chloro-1,3-butadiene. Preferably, the rubber is produced by an emulsion polymerization. Additionally, the polymerization can occur in the presence of sulfur to incorporate crosslinking in the polymer.

Preferably, the free-radical carbon-carbon crosslinkable, hydrocarbon-based polymer is an ethylene polymer.

With regard to the suitable ethylene polymers, the polymers generally fall into four main classifications: (1) highly-branched; (2) heterogeneous linear; (3) homogeneously branched linear; and (4) homogeneously branched substantially linear. These polymers can be prepared with Ziegler-Natta catalysts, metallocene or vanadium-based single-site catalysts, or constrained geometry single-site catalysts.

Highly branched ethylene polymers include low density polyethylene (LDPE). Those polymers can be prepared with a free-radical initiator at high temperatures and high pressure. Alternatively, they can be prepared with a coordination catalyst at high temperatures and relatively low pressures. These polymers have a density between 0.910 grams per cubic centimeter and 0.940 grams per cubic centimeter as measured by ASTM D-792.

Heterogeneous linear ethylene polymers include linear low density polyethylene (LLDPE), ultra-low density polyethylene (ULDPE), very low density polyethylene (VLDPE), and high density polyethylene (HDPE). Linear low density ethylene polymers have a density between 0.850 grams per cubic centimeter and 0.940 grams per cubic centimeter and a melt index between 0.01 to 100 grams per 10 minutes as measured by ASTM 1238, condition I. Preferably, the melt index is between 0.1 to 50 grams per 10 minutes. Also, preferably, the LLDPE is an interpolymer of ethylene and one or more other alphaolefins having from 3 to 18 carbon atoms, more preferably from 3 to 8 carbon atoms. Preferred comonomers include 1-butene, 4-methyl-1-pentene, 1-hexene, and 1-octene.

Ultra-low density polyethylene and very low density polyethylene are known interchangeably. These polymers have a density between 0.870 grams per cubic centimeter and 0.910 grams per cubic centimeter. High density ethylene polymers are generally homopolymers with a density between 0.941 grams per cubic centimeter and 0.965 grams per cubic centimeter.

Homogeneously branched linear ethylene polymers include homogeneous LLDPE. The uniformly branched/ homogeneous polymers are those polymers in which the comonomer is randomly distributed within a given interpolymer molecule and wherein the interpolymer molecules have a similar ethylene/comonomer ratio within that interpolymer.

Homogeneously-branched substantially linear ethylene polymers include (a) homopolymers of $C_2$-$C_{20}$ olefins, such as ethylene, propylene, and 4-methyl-1-pentene, (b) interpolymers of ethylene with at least one $C_3$-$C_{20}$ alpha-olefin, $C_2$-$C_{20}$ acetylenically unsaturated monomer, $C_4$-$C_{18}$ diolefin, or combinations of the monomers, and (c) interpolymers of ethylene with at least one of the $C_3$-$C_{20}$ alphaolefins, diolefins, or acetylenically unsaturated monomers in combination with other unsaturated monomers. These polymers generally have a density between 0.850 grams per cubic centimeter and 0.970 grams per cubic centimeter. Preferably, the density is between 0.85 grams per cubic centimeter and 0.955 grams per cubic centimeter, more preferably, between 0.850 grams per cubic centimeter and 0.920 grams per cubic centimeter.

Ethylene/styrene interpolymers useful in the present invention include substantially random interpolymers prepared by polymerizing an olefin monomer (i.e., ethylene, propylene, or alpha-olefin monomer) with a vinylidene aromatic monomer, hindered aliphatic vinylidene monomer, or cycloaliphatic vinylidene monomer. Suitable olefin monomers contain from 2 to 20, preferably from 2 to 12, more preferably from 2 to 8 carbon atoms. Preferred such monomers include ethylene, propylene, 1-butene, 4-methyl-1-pentene, 1-hexene, and 1-octene. Most preferred are ethylene and a combination of ethylene with propylene or $C_{4-8}$ alphaolefins. Optionally, the ethylene/styrene interpolymers polymerization components can also include ethylenically unsaturated monomers such as strained ring olefins. Examples of strained ring olefines include norbornene and $C_{1-10}$ alkyl- or $C_{6-10}$ aryl-substituted norbornenes.

Ethylenelunsaturated ester copolymers useful in the present invention can be prepared by conventional high-pressure techniques. The unsaturated esters can be alkyl acrylates, alkyl methacrylate, or vinyl carboxylates. The alkyl groups can have 1 to 8 carbon atoms and preferably have 1 to 4 carbon atoms. The carboxylate groups can have 2 to

8 carbon atoms and preferably have 2 to 5 carbon atoms. The portion of the copolymer attributed to the ester comonomer can be in the range of 5 to 50 percent by weight based on the weight of the copolymer, and is preferably in the range of 15 to 40 percent by weight Examples of the acrylates and methacrylates are ethyl acrylate, methyl acrylate, methyl methacrylate, t-butyl acrylate, n-butyl acrylate, n-butyl methacrylate, and 2-ethylhexyl acrylate. Examples of the vinyl carboxylates are vinyl acetate, vinyl propionate, and vinyl butanoate. The melt index of the ethylene/unsaturated ester copolymers can be in the range of 0.5 to 50 grams per 10 minutes.

Halogenated ethylene polymers useful in the present invention include fluorinated, chlorinated, and brominated olefin polymers. The base olefin polymer can be a homopolymer or an interpolymer of olefins having from 2 to 18 carbon atoms. Preferably, the olefin polymer will be an interpolymer of ethylene with propylene or an alpha-olefin monomer having 4 to 8 carbon atoms. Preferred alpha-olefin comonomers include 1-butene, 4-methyl-1-pentene, 1-hexene, and 1-octene. Preferably, the halogenated olefin polymer is a chlorinated polyethylene.

Natural rubbers suitable in the present invention include high molecular weight polymers of isoprene. Preferably, the natural rubber will have a number average degree of polymerization of about 5000 and a broad molecular weight distribution.

Preferably, the nitrile rubber of the present invention is a random copolymer of butadiene and acrylonitrile.

The polybutadiene rubber useful in the present invention is preferably a homopolymer of 1,4-butadiene.

Useful styrene/butadiene rubbers include random copolymers of styrene and butadiene. Typically, these rubbers are produced by free radical polymerization. Styrene/butadiene/styrene block copolymers of the present invention are a phase-separated system. The styrene/ethylene/butadiene/styrene copolymers are also useful in the present invention.

Useful free-radical inducing species include organic peroxides, Azo free radical initiators, and bicumene. Preferably, the free-radical inducing species is an organic peroxide. Also, oxygen-rich environments are preferred for initiating useful free-radicals. Preferable organic peroxides include dicumyl peroxide, Vulcup R, and dialkyl peroxides. More preferable, the organic peroxide is a dialkyl peroxide selected from the group consisting of 2,5-bis(tert-butylperoxy)-2,5-dimethylhexane and 2,5-bis(tert-butylperoxy)-2,5-dimethyl-3-hexyne. Most preferably, the organic peroxide is 2,5-bis (tert-butylperoxy)-2,5-dimethyl-3-hexyne.

The organic peroxide can be added via direct injection. Preferably, the free-radical inducing species is present in an amount between 0.005 weight percent and 20.0 weight percent, more preferably, between 0.01 weight percent and 10.0 weight percent, most preferably, between 0.03 weight percent and 5.0 weight percent.

In addition to or as alternative to the free-radical inducing species, the polymer can form free radicals when subjected to shear energy, heat, or radiation. Accordingly, shear energy, heat, or radiation can act as free-radical inducing species. Moreover, the free-radical trapping species can act in the presence of free-radicals generated by shear energy, heat, or radiation as the free-radical trapping species would act in the presence of free radicals generated by the previously-described free-radical inducing species.

It is believed that when the free-radicals are generated by an organic peroxide, oxygen, air, shear energy, heat, or radiation, the combination of the free-radical trapping species and the source of free-radical is required for coupling of the polymer. Control of this combination determines the molecular architecture of the coupled polymer (that is, the rheology-modified polymer). Sequential addition of the free-radical trapping species followed by gradual initiation of free radicals provides an unprecedented degree of control over the molecular architecture.

It is also believed that a grafting site can be initiated on the polymer and capped with the free-radical trapping species to form a pendant stable free radical. Later, the pendant stable free radical can react with a complementary, thermally-reversible bond contributor, imparting desired levels of homogeneity.

Examples of the free radical trapping species useful in the present invention include hindered amine-derived stable organic free radicals. Preferably, when the free radical trapping species is a hindered amine-derived stable organic free radical, it is a hydroxy-derivative of 2,2,6,6,-tetramethyl piperidinyl oxy (TEMPO). More preferably, the free-radical trapping species is 4-hydroxy-TEMPO.

Preferably, the free radical trapping species is present in an amount between 0.005 weight percent and 20.0 weight percent, more preferably, between 0.01 weight percent and 10.0 weight percent, most preferably, between 0.03 weight percent and 5.0 weight percent.

Preferably, the ratio of the free-radical inducing species to the free radical trapping species and the concentration of the free-radical trapping species promote coupling of the polymer. More preferably, the free-radical inducing species to the free-radical trapping species are present in a ratio greater than 1, more preferably, between 20:1 to 1:1.

The free-radical trapping species and the free-radical inducing species can be combined with the polymer in a variety of ways, including direct compounding, direct soaking, and direct injection.

Complementary, thermally-reversible bond contributors include compounds having a functional group suitable for preparing thermally-reversible functional groups such as urethanes, ureas, azlactones, maleimide-furan diels alder adducts, and other diels alder adducts. For example, when the free radical trapping species has a hydroxy group as its thermally-reversible bond contribution site, the complementary, thermally-reversible bond contributor can be an isocyanate. Particularly useful isocyanates in the present invention include diisocyanates or a polymeric diisocyanates. Preferably, the diisocyanate is selected from the group consisting of aliphatic and aromatic diisocyanates. Suitable aliphatic diisocyanates include hexamethylene diisocyanate. More preferably, the diisocyanate is an aromatic diisocyanate selected from the group consisting of methylene diphenyl diisocyanate, polymeric diphenylmethane diisocyanate, and toluene diisocyanate.

In an alternate embodiment, the present invention is a process for preparing a free-radical crosslinkable polymeric composition. The first step of the process is preparing a polymer-matrix mixture by mixing its components. The components include a free-radical reactive polymer, a free-radical inducing species, a free radical trapping species having at least one trapping site and a thermally-reversible bond contribution site, and a complementary, thermally-reversible bond contributor. The free radical trapping species substantially suppresses the undesirable reaction. In the second step, the polymer is crosslinked through the free-radical trapping species.

In a preferred embodiment, the present invention is an article of manufacture prepared from the rheology-modifiable polymeric composition or free-radical crosslinkable polymeric composition. Any number of processes can be used to prepare the articles of manufacture. Specifically useful processes include injection molding, extrusion, compression molding, rotational molding, thermoforming, blowmolding, powder coating, Banbury batch mixers, fiber spinning, and calendaring.

Suitable articles of manufacture include wire-and-cable insulations, wire-and-cable semiconductive articles, wire-and-cable coatings and jackets, cable accessories, shoe soles, multicomponent shoe soles (including polymers of different densities and type), weather stripping, gaskets, profiles, durable goods, rigid ultradrawn tape, run flat tire inserts, construction panels, composites (e.g., wood composites), pipes, foams, blown films, and fibers (including binder fibers and elastic fibers).

EXAMPLES

The following non-limiting examples illustrate the invention.

Comparative Examples 1 - 2 and Example 3

Two comparative examples and one example of the present invention were prepared with a low density polyethylene having a melt index of 2.4 grams per 10 minutes, I21/I2 of 52, a density of 0.9200 grams per cubic centimeter, a polydispersity (Mw/Mn) of 3.54, and a melting point of 110.2 degrees Celsius.

Prior to mixing, the polyethylene was dried under vacuum to remove any residual moisture. Each of the formulations shown in Table I, excluding the peroxide, was prepared in a Brabender mixer to make 40 grams samples at 125 degrees Celsius for 3 minutes. The peroxide was subsequently added. The composition was compounding for 4 additional minutes. The mixing bowl was purged with nitrogen.

The DXM-446 low density polyethylene was commercially available from The Dow Chemical Company. The MDI urethane bis-TEMPO (MDI UBT) adduct was synthesized using methylene diphenyl diisocyanate and 4-hydroxy TEMPO (commercially available from A.H. Marks). The Luperox™ 101 2,5-bis(tert-butylperoxy)-2,5-dimethylhexane organic peroxide was commercially available from Atofina.

The reaction kinetics were investigated using a dynamic mechanical spectrometer (DMS). The DMS testing was performed on an ARES controlled strain rheometer (TA instruments) equipped with dual cantilever fixtures for torsion testing.

The test specimens were prepared by compression molding for 2 hours at 160 degrees Celsius to ensure complete decomposition of the Luperox™ 101 organic peroxide. A 1.5 mm plaque was pressed and cut into a bar of dimensions 32 mm x12 mm.

The specimens was then clamped at both ends between the fixtures separated by 10 mm (grip separation ΔL) and subjected to successive temperature steps from 30°C to 220°C (2°C per step). At each temperature, the torsion moduli G' and G" were measured at an angular frequency of 10 rad/s, the strain amplitude being maintained between 0.1% and 3% to ensure that the torque was sufficient and that the measurement remained in the linear regime. An initial static force of 10g was maintained (auto-tension mode) to prevent slack in the specimen when thermal expansion occurred. As a consequence, the grip separation ΔL increased with temperature, particularly above the melting or softening point. The test stopped at the maximum temperature or when the gap between the fixtures reached 65 mm. Figure 1 shows the temperature-dependent dynamic modulus of the exemplified compositions.

Gel contents were measured by cyclohexane extraction. The test specimens for cyclohexane extraction were prepared by processing the samples for 80 minutes in a moving die rheometer (MDR) at 160 degrees Celsius, a frequency of 100 cycles per minute, and an arc of 0.5 degrees. The test specimens weighed about 5 grams and were placed between Mylar™ sheets and then into the MDR. The results are reported in Table I.

The shear thinning behavior of Comparative Example 1 and Example 3 were evaluated by dynamic oscillatory shear at 220 degrees Celsius. The test specimens were compression molded in a press at 160 degrees Celsius for 100

minutes. Comparative Example 2 was not evaluated because it was thermoset. Each frequency sweep took about 15 minutes to complete (including about 3 minutes initially to equilibrate at test temperature). Comparative Example 1 was evaluated at 140 degrees Celsius, 180 degrees Celsius, and 220 degrees Celsius. Example 3 was evaluated at 220 degrees Celsius. Figure 2 shows the melt viscosities for Comparative Example 1 and Example 3.

TABLE I

| Component | C. Ex. 1 | C. Ex. 2 | Ex. 3 |
|---|---|---|---|
| LDPE | 100 | 98.75 | 95.75 |
| MDI UBT | | | 3.00 |
| Luperox 101 | | 1.25 | 1.25 |
| Cyclohexane Extraction | | | |
| Gel Content (%) | 0 | 85 | 79 |

4-Hydroxy-TEMPO Graft of LDPE

A 4-hydroxy-TEMPO graft of low density polyethylene was prepared using 4-hydroxy TEMPO, DXM-446 low density polyethylene, and Luperox™ 130 2,5-bis(tert-butylperoxy)-2,5-dimethyl-3-hexyne organic peroxide. The 4-hydroxy TEMPO was commercially available from A.H. Marks. The low density polyethylene was commercially available from The Dow Chemical Company. The Luperox™ 130 2,5-bis(tert-butylperoxy)-2,5-dimethyl-3-hexyne organic peroxide was commercially available from Atofina.

Five (5) weight percent of the 4-hydroxy-TEMPO and 92.5 weight percent of the low density polyethylene were fluxed in a 250-gram Brabender mixing bowl for 3 minutes at 125 degrees Celsius. Next, 2.5 weight percent of the organic peroxide was added. The composition was compounding for 4 additional minutes. The temperature was then raised to 180 degrees Celsius. The mixing was continued for an additional 150 minutes. The mixing bowl was purged continuously with nitrogen.

Thermally-Reversibly Crosslinked LDPE

A thermally-reversibly crosslinked low density polyethylene was prepared by first fluxing the 4-hydroxy-TEMPO grafted low density polyethylene prepared above for 3 minutes at 125 degrees Celsius in a 250-gram Brabender mixing bowl. Next, 4 weight percent of methylene diphenyl diisocyanate was added and the composition underwent 4 additional minutes of mixing time. The mixing bowl was purged continuously with nitrogen.

The thermally-reversibly crosslinked LDPE was compression molded at 140 degrees Celsius for 180 minutes into 1270μm (50-mil) thick plaques. The thermally-reversibly crosslinked LDPE contained 80 percent gels as measured by cyclohexane extraction.

As Example 6, the thermally-reversibly crosslinked LDPE was compared with Comparative Examples 4 and 5. The formulations of the comparative examples are shown in Table II. The results for physical evaluations, including aging results, are reported in Table II.

For the aging study, the thermally-reversibly crosslinked LDPE was aged as a 2921μm (0.2921cm) (115 mil (0.115 inch)) thick plaque for 7 weeks at room temperature. The plaque was then cured in a moving die rheometer at 140 degrees Celsius for 2 hours, a frequency of 100 cycles per minute, and an arc of 0.5 degrees.

The Dielectric Constant and the Dissipation Factor over the temperature range of about 25 degrees Celsius to about 90 degrees Celsius for Comparative Examples 4 and 5 and Example 6 are shown in Figures 3 and 4.

The shear thinning behavior of Comparative Example 1, Example 3, and Example 6 were evaluated by dynamic oscillatory shear at 220 degrees Celsius. The test specimens were compression molded in a press at 140 degrees Celsius for 180 minutes. The frequency sweep was conducted twice. Each frequency sweep took about 15 minutes to complete (including about 3 minutes initially to equilibrate at test temperature). Comparative Example 1, Example 3, Example 6 (first pass), and Example 6 (second pass) were evaluated at 220 degrees Celsius. Figure 5 shows the melt viscosities.

TABLE II

| Component | C. Ex. 4 | C. Ex. 5 | Example 6 |
|---|---|---|---|
| LDPE | 100 | 98.75 | |

(continued)

| Component | C. Ex. 4 | C. Ex. 5 | Example 6 |
|---|---|---|---|
| Luperox 130 | | 1.25 | |
| 4-hydroxy-TEMPO Grafted LDPE | | | 100 |
| Properties | | | |
| Tensile Strength (mPa) (psi) | 13.52 (1932) | 18.12 (2589) | 16.69 (2384) |
| Elongation (%) | 542 | 417 | 320 |
| Hot Creep (%) | | 117 | 70 |
| AC Breakdown Strength (Volts/Mil) | 954 | 886 | 950 |
| AC Breakdown Strength-Aged (Volts/Mil), 150 v/mil, 1KHz | 880 | 836 | 987 |

**Claims**

**1.** A polymeric composition comprising:

(a) a free-radical reactive polymer,
(b) a free-radical inducing species,
(c) a graftable, hindered amine-derived stable organic free radical, having at least one trapping site and a thermally-reversible bond contribution site, and
(d) a complementary, thermally-revesible bond contributor,

wherein the graftable hindered amine derived stable organic free radical species suppresses degradation of the polymer in the presence of the free-radical inducing species and at a trapping site, being graftable onto the polymer after the polymer forms a free radical.

**2.** The polymeric composition of Claim 1 wherein the resulting polymer being a rheology-modified polymer having a gel content as measured by cyclohexane extraction (ASTM 2765) of less than 10 weight percent.

**3.** The polymeric composition of Claim 1 wherein the resulting polymer being a rheology-modified polymer having a gel content as measured by cyclohexane extraction (ASTM 2765) of less than 5 weight percent greater than the gel content of the base polymer.

**4.** The polymeric composition of Claim 1 wherein the resulting polymer being a thermally-reversibly crosslinked polymer having a gel content as measured by cyclohexane extraction (ASTM 2765) of at least 10 weight percent

**5.** The polymeric composition of Claim 1 wherein the resulting polymer being a thermally-reversibly crosslinked polymer having a gel content as measured by cyclohexane extraction (ASTM 2765) of at least 5 weight percent greater than the gel content of the base polymer.

**6.** The polymeric composition of Claim 1 wherein the polymer is selected from the group consisting of butyl rubber, polyacrylate rubber, polyisobutene, propylene homopolymers, propylene copolymers, styrene/ butadiene/ styrene block copolymers, styrene/ ethylene/ butadiene/ styrene copolymers, polymers of vinyl aromatic monomers, vinyl chloride polymers, and blends thereof.

**7.** A polymeric composition comprising:

(a) a free-radical reactive polymer,
(b) a free-radical inducing species,
(c) a graftable, hindered amine-derived stable organic free radical having at least one trapping site and a thermally-reversible bond contribution site, and
(d) a complementary, thermally-reversible bond contributor,

wherein the graftable hindered amine derived stable organic free radical suppresses carbon-carbon crosslinking of the polymer in the presence of the free-radical inducing species and at a trapping site, being graftable onto the polymer after the polymer forms a free radical.

**8.** The polymeric composition of Claim 7 wherein the polymer is selected from the group consisting of acrylonitrile butadiene styrene rubber, chloroprene rubber, chlorosulfonated polyethylene rubber, ethylene/alpha-olefin copolymers, ethylene/diene copolymer, ethylene homopolymers, ethylene/propylene/diene monomers, ethylene/propylene rubbers, ethylene/styrene interpolymers, ethylene/unsaturated ester copolymers, fluoropolymers, halogenated polyethylenes, hydrogenated nitrile butadiene rubber, natural rubber, nitrile rubber, polybutadiene rubber, silicone rubber, styrene/butadiene rubber, styrene/ butadiene/ styrene block copolymers, styrene/ ethylene/ butadiene/ styrene copolymers, and blends thereof.

**Patentansprüche**

**1.** Polymerzusammensetzung umfassend:

(a) ein mit freien Radikalen reaktives Polymer,
(b) eine Spezies, die die Bildung freier Radikale induziert,
(c) ein aufpropfbares, sterisch gehindertes stabiles organisches freies Radikal, das sich von einem Amin ableitet, mit mindestens einer Einfangstelle und einer thermisch reversiblen Stelle, die zur Bindung beiträgt, und
(d) einer komplementären Substanz, die zur thermisch reversiblen Bindung beiträgt,

wobei die stabile, organische freie Radikalen-Spezies den Abbau des Polymers in Gegenwart einer Spezies, die freie Radikalbildung induziert, sowie einer Einfangstelle unterdrückt, indem sie nach Bildung eines freien Radikals durch das Polymer auf das Polymer aufpropfbar ist.

**2.** Polymerzusammensetzung nach Anspruch 1, wobei das sich ergebende Polymer ein biologisch modifiziertes Polymer mit einem Gelgehalt von weniger als 10 Gewichtsprozent darstellt, der mittels Cyclohexan-Extraktion (ASTM 2765) gemessen wird.

**3.** Polymerzusammensetzung nach Anspruch 1, wobei das sich ergebende Polymer, das ein Rheologie-modifiziertes Polymer mit einem Gelgehalt von weniger als 5 Gewichtsprozent ist, welches mittels Cyclohexan-Extraktion (ASTM 2765) gemessen wurde, größer als der Gelgehalt des Grundpolymers ist.

**4.** Polymerzusammensetzung nach Anspruch 1, wobei das sich ergebende Polymer ein thermisch reversibles vernetztes Polymer mit einem Gelgehalt von mindestens 10 Gewichtsprozent ist, der mittels Cyclohexan-Extraktion (ASTM 2765) gemessen wurde.

**5.** Polymerzusammensetzung nach Anspruch 1, wobei das sich ergebende Polymer, welches ein thermisch reversibles vernetztes Polymer mit einem Gelgehalt, der mittels Cyclohexan-Extraktion (ASTM 2765) gemessen wurde, von mindestens 10 Gewichtsprozent, größer als der Gelgehalt des Grundpolymers ist.

**6.** Polymerzusammensetzung nach Anspruch 1, wobei das Polymer ausgewählt ist aus der Gruppe bestehend aus Butyl-Kautschuk, Acrylat-Kautschuk, Polyisobuten-, Propylen-Homopolymeren, Propylen-Copolymeren, Styrol/ Butadien /Styrol-Block-Copolymeren, Styrol/ Ethylen /Butadien/ Styrol-Copolymeren, Polymeren von aromatischen Vinylmonomeren, Vinylchloridpolymeren und Gemischen davon.

**7.** Polymerzusammensetzung umfassend:

(a) ein mit freien Radikalen reaktives Polymer,
(b) eine Spezies, die freie Radikalbildung induziert,
(c) ein propfbares, sterisch gehindertes stabiles organisches freies Radikal, das sich von einem Amin ableitet, mit mindestens einer Einfangstelle und einer thermisch reversiblen Stelle, die zur Bindung beiträgt, und
(d) eine komplementäre, thermisch reversible Substanz, die zur Bindung beiträgt,

wobei das aufpropfbare, sterisch gehinderte, stabile organische freie Radikal, das von einem Amin stammt, die Kohlenstoff-Kohlenstoff-Vernetzung des Polymers in Gegenwart der Spezies, die freie Radikallösung auslöst sowie

einer Einfangstelle, unterdrückt, indem das freie Radikal nach Bildung eines freien Radikals durch das Polymer auf das Polymer aufpropfbar ist.

**8.** Polymerzusammensetzung nach Anspruch 7, wobei das Polymer ausgewählt ist aus der Gruppe bestehend aus Acrylnitril-butadien-styrol-Kautschuk, Chlorpropen-Kautschuk, Chlor-sulfoniertem Polyethylen-Kautschuk, Ethylen/Alpha-Olefin-Copolymeren, Ethylen/Dien-Copolymer, Ethylen/Homopolymeren, Ethylen/Propylen/Dien-Monomeren, Ethylen/Propylen-Kautschuk, Ethylen/Styrol-Interpolymeren, Ethylen/ungesättigten Ester-Copolymeren, Fluorpolymeren, halogenierten Polyethylenen, hydriertem Nitril-butadien-Kautschuk, Naturkautschuk, Nitril-Kautschuk, Polybutadien-Kautschuk, Silicon-Kautschuk, Styrol/Butadien-Kautschuk, Styrol/ Butadien/ Styrol-Block-Copolymeren, Styrol/ Ethylen/ Butadien/Styrol-Copolymeren und Gemischen davon.

**Revendications**

**1.** Composition de polymère, comprenant :

a) un polymère réactif vis-à-vis de radicaux libres,
b) une espèce générant des radicaux libres,
c) un radical libre organique stable, greffable et dérivé d'une amine encombrée, doté d'au moins un site de piégeage et d'un site contribuant à une liaison thermiquement réversible,
d) et une espèce complémentaire contribuant à une liaison thermiquement réversible,
lequel radical libre organique stable, greffable et dérivé d'une amine encombrée empêche le polymère de se dégrader en présence de l'espèce générant des radicaux libres et au niveau d'un site de piégeage, étant donné qu'il peut se greffer sur le polymère après que celui-ci a formé un radical libre.

**2.** Composition de polymère conforme à la revendication 1, dans laquelle le polymère résultant est un polymère à rhéologie modifiée dont la teneur en gel, mesurée par extraction au cyclohexane (norme ASTM 2765), est inférieure à 10 % en poids.

**3.** Composition de polymère conforme à la revendication 1, dans laquelle le polymère résultant est un polymère à rhéologie modifiée dont la teneur en gel, mesurée par extraction au cyclohexane (norme ASTM 2765), est supérieure de moins de 5 % en poids à la teneur en gel du polymère de base.

**4.** Composition de polymère conforme à la revendication 1, dans laquelle le polymère résultant est un polymère réticulé, à réticulation thermiquement réversible, dont la teneur en gel, mesurée par extraction au cyclohexane (norme ASTM 2765), vaut au moins 10 % en poids.

**5.** Composition de polymère conforme à la revendication 1, dans laquelle le polymère résultant est un polymère réticulé, à réticulation thermiquement réversible, dont la teneur en gel, mesurée par extraction au cyclohexane (norme ASTM 2765), est supérieure d'au moins 5 % en poids à la teneur en gel du polymère de base.

**6.** Composition de polymère conforme à la revendication 1, pour laquelle le polymère est choisi dans l'ensemble constitué par les suivants : caoutchouc butyl, caoutchoucs de type polyacrylate, polyisobutène, homopolymères de propylène, copolymères de propylène, copolymères à blocs styrène/butadiène/styrène, copolymères styrène/éthylène/butadiène/styrène, polymères de monomères vinyl-aromatiques, et polymères de chlorure de vinyle, ainsi que les mélanges de tels polymères.

**7.** Composition de polymère, comprenant :

a) un polymère réactif vis-à-vis de radicaux libres,
b) une espèce générant des radicaux libres,
c) un radical libre organique stable, greffable et dérivé d'une amine encombrée, doté d'au moins un site de piégeage et d'un site contribuant à une liaison thermiquement réversible,
d) et une espèce complémentaire contribuant à une liaison thermiquement réversible,
lequel radical libre organique stable, greffable et dérivé d'une amine encombrée empêche le polymère de former des liaisons carbone-carbone de réticulation en présence de l'espèce générant des radicaux libres et au niveau d'un site de piégeage, étant donné qu'il peut se greffer sur le polymère après que celui-ci a formé un radical libre.

**8.** Composition de polymère conforme à la revendication 7, pour laquelle le polymère est choisi dans l'ensemble constitué par les suivants : caoutchouc acrylonitrile/butadiène/styrène, caoutchouc chloroprène, caoutchouc polyéthylène chlorosulfoné, copolymères d'éthylène et d'alpha-oléfine, copolymères d'éthylène et de diène, homopolymères d'éthylène, copolymères éthylène/propylène/diène, caoutchoucs éthylène/propylène, interpolylymères d'éthylène et de styrène, copolymères d'éthylène et d'ester insaturé, polymères fluorés, polyéthylènes halogénés, caoutchouc nitrile/butadiène hydrogéné, caoutchouc naturel, caoutchouc nitrile, caoutchouc polybutadiène, caoutchoucs de silicone, caoutchouc styrène/butadiène, copolymères à blocs styrène/butadiène/styrène, et copolymères styrène/éthylène/butadiène/styrène, ainsi que les mélanges de tels polymères.

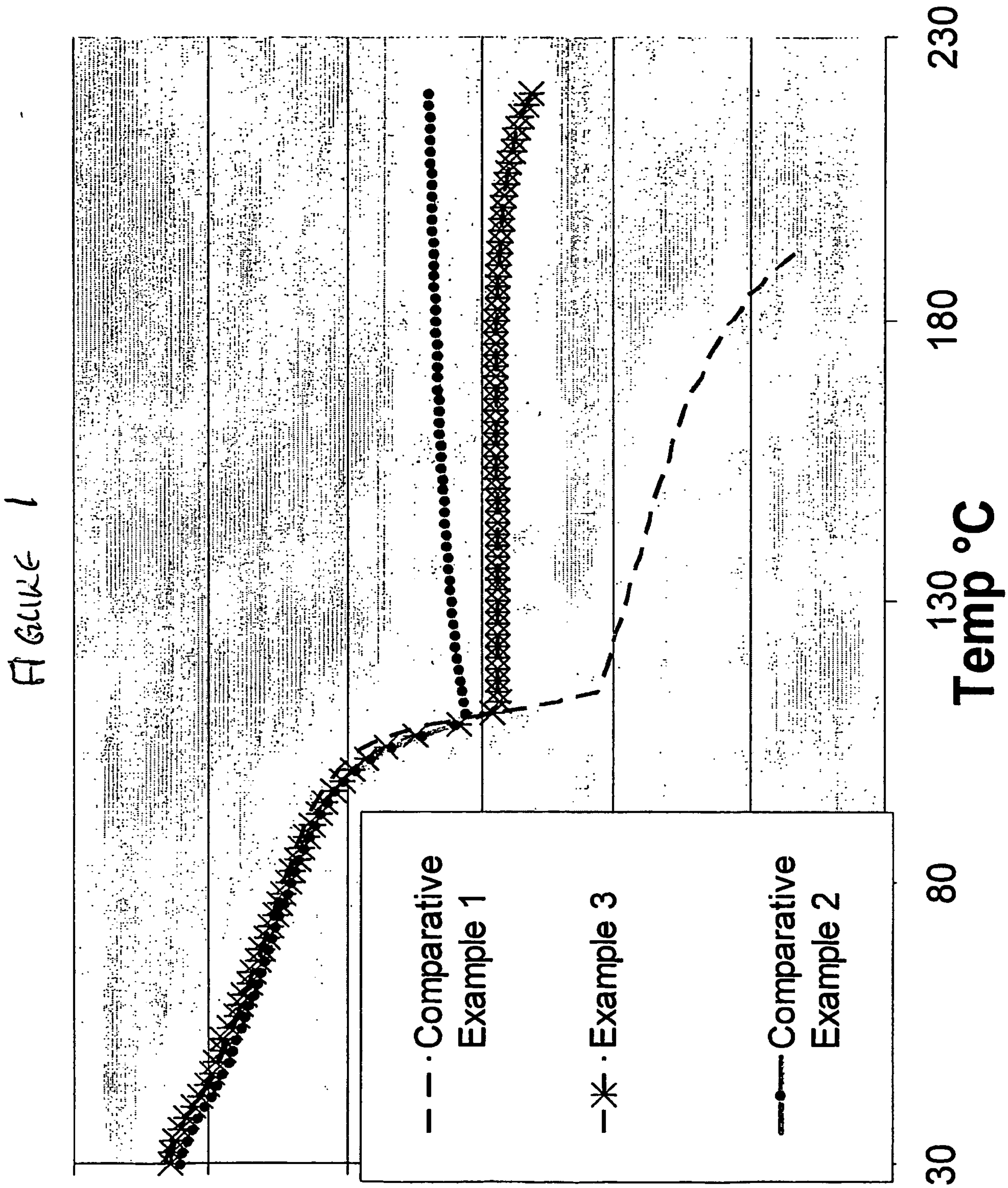
FIGURE 1
G' dyn/cm2
1.E+10
1.E+09
1.E+08
1.E+07
1.E+06
1.E+05
1.E+04
30
80
130
180
230
Temp °C
Comparative Example 1
Example 3
Comparative Example 2

FIGURE 2

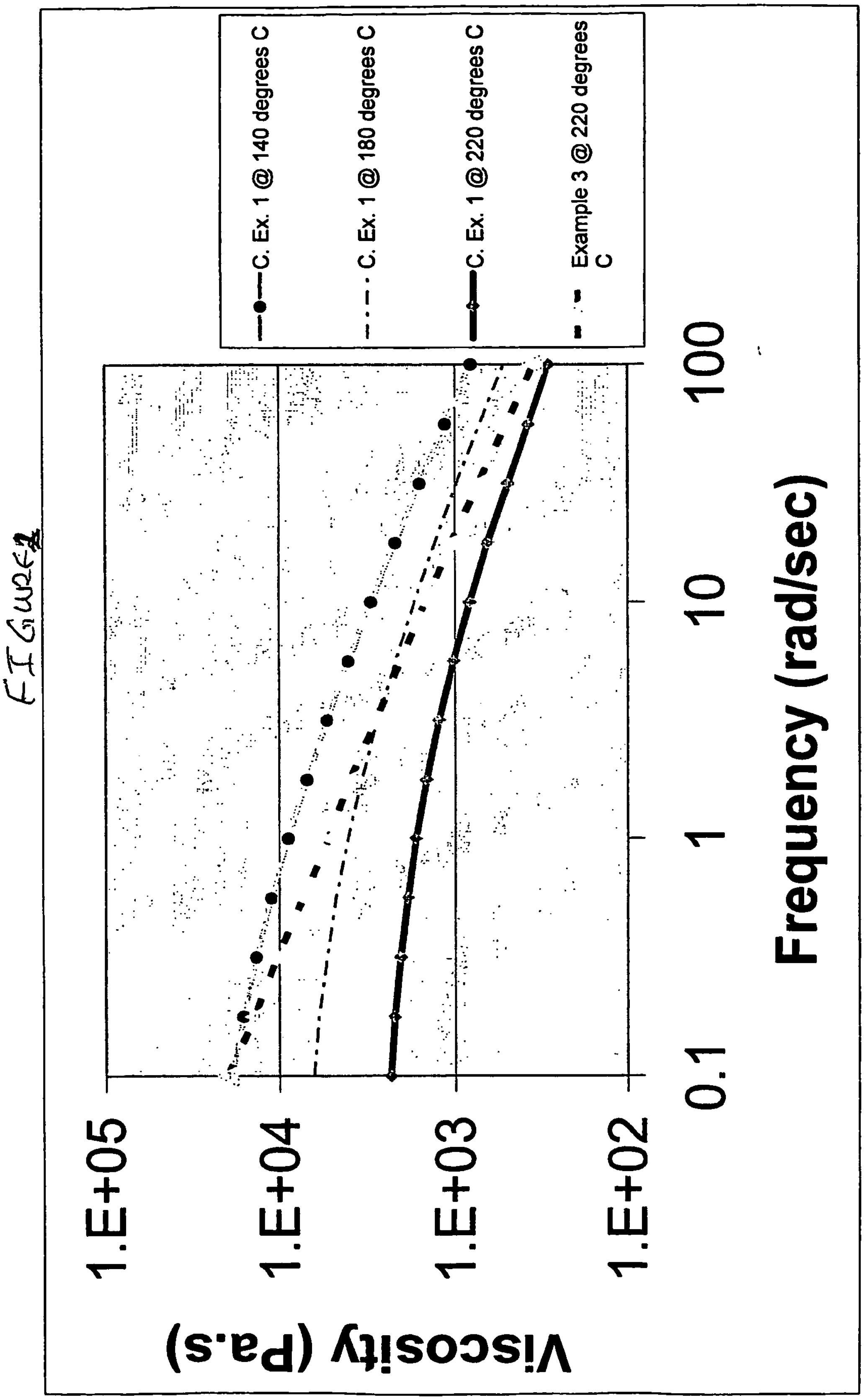

Viscosity (Pa.s)
1.E+05
1.E+04
1.E+03
1.E+02
0.1
1
10
100
Frequency (rad/sec)
C. Ex. 1 @ 140 degrees C
C. Ex. 1 @ 180 degrees C
C. Ex. 1 @ 220 degrees C
Example 3 @ 220 degrees C

FIGURE 3

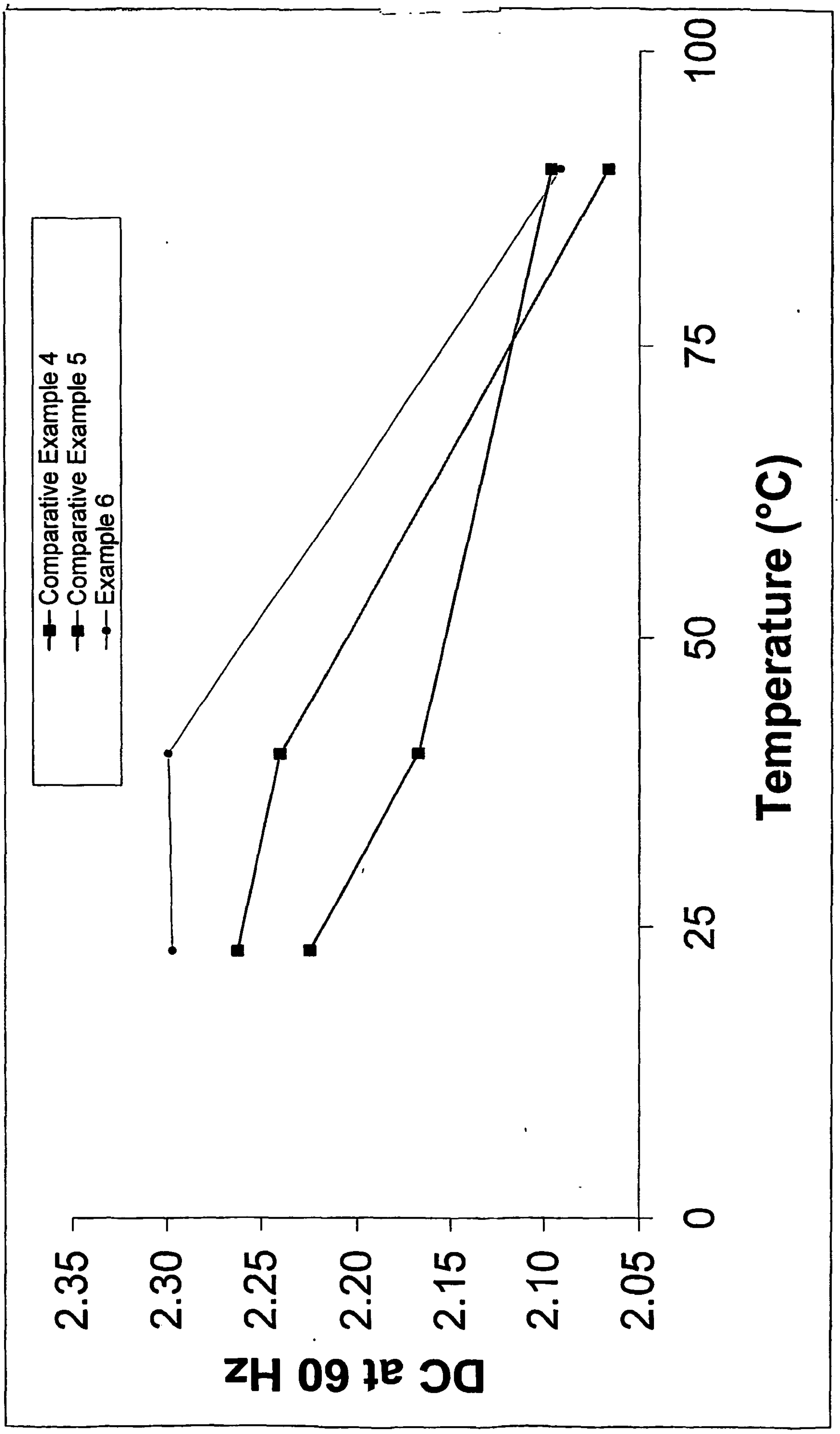
DC at 60 Hz
2.35
2.30
2.25
2.20
2.15
2.10
2.05
0
25
50
75
100
Temperature (°C)
Comparative Example 4
Comparative Example 5
Example 6

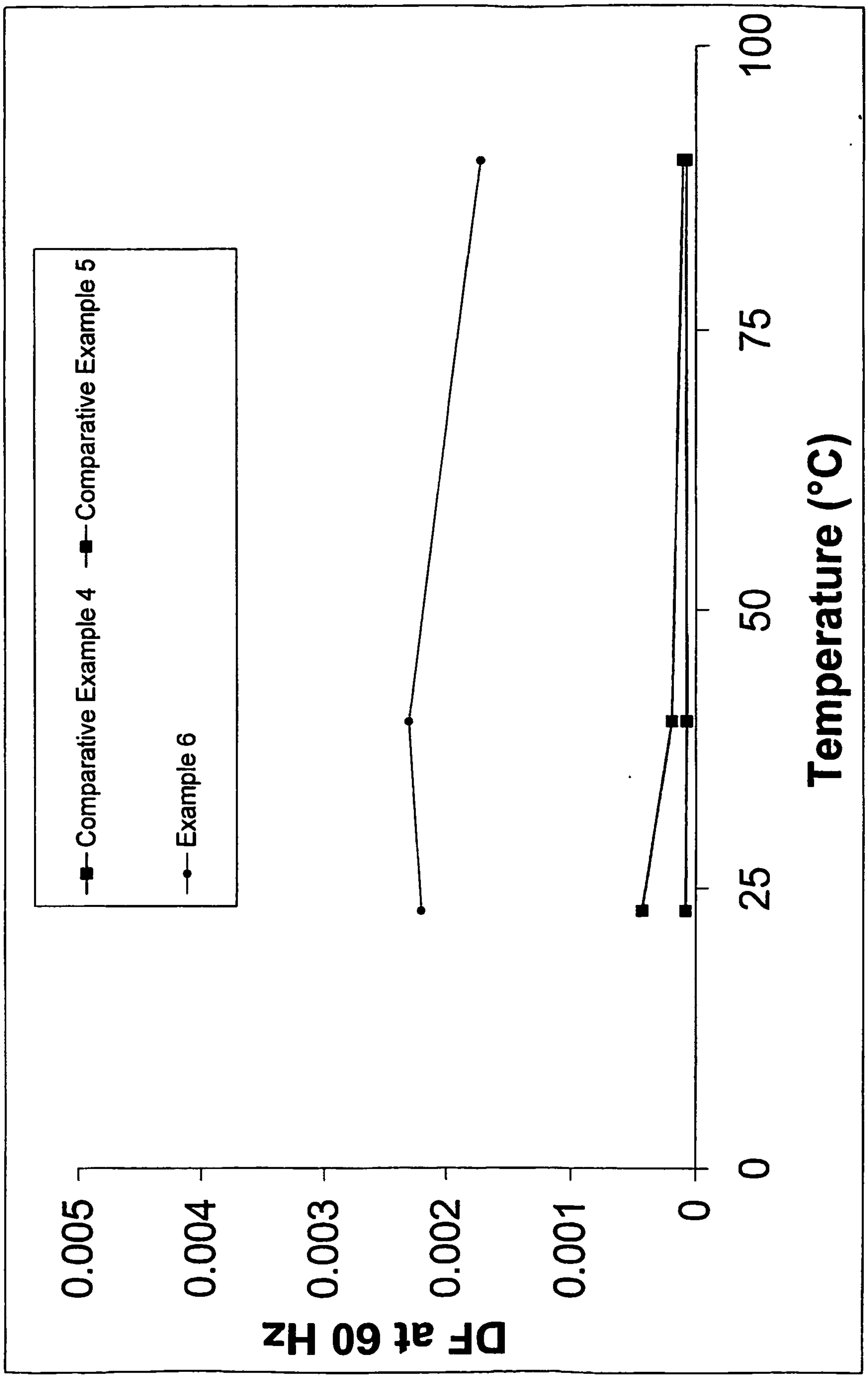
FIGURE 4
DF at 60 Hz
0.005
0.004
0.003
0.002
0.001
0
Temperature (°C)
0
25
50
75
100
Comparative Example 4
Comparative Example 5
Example 6

FIGURES

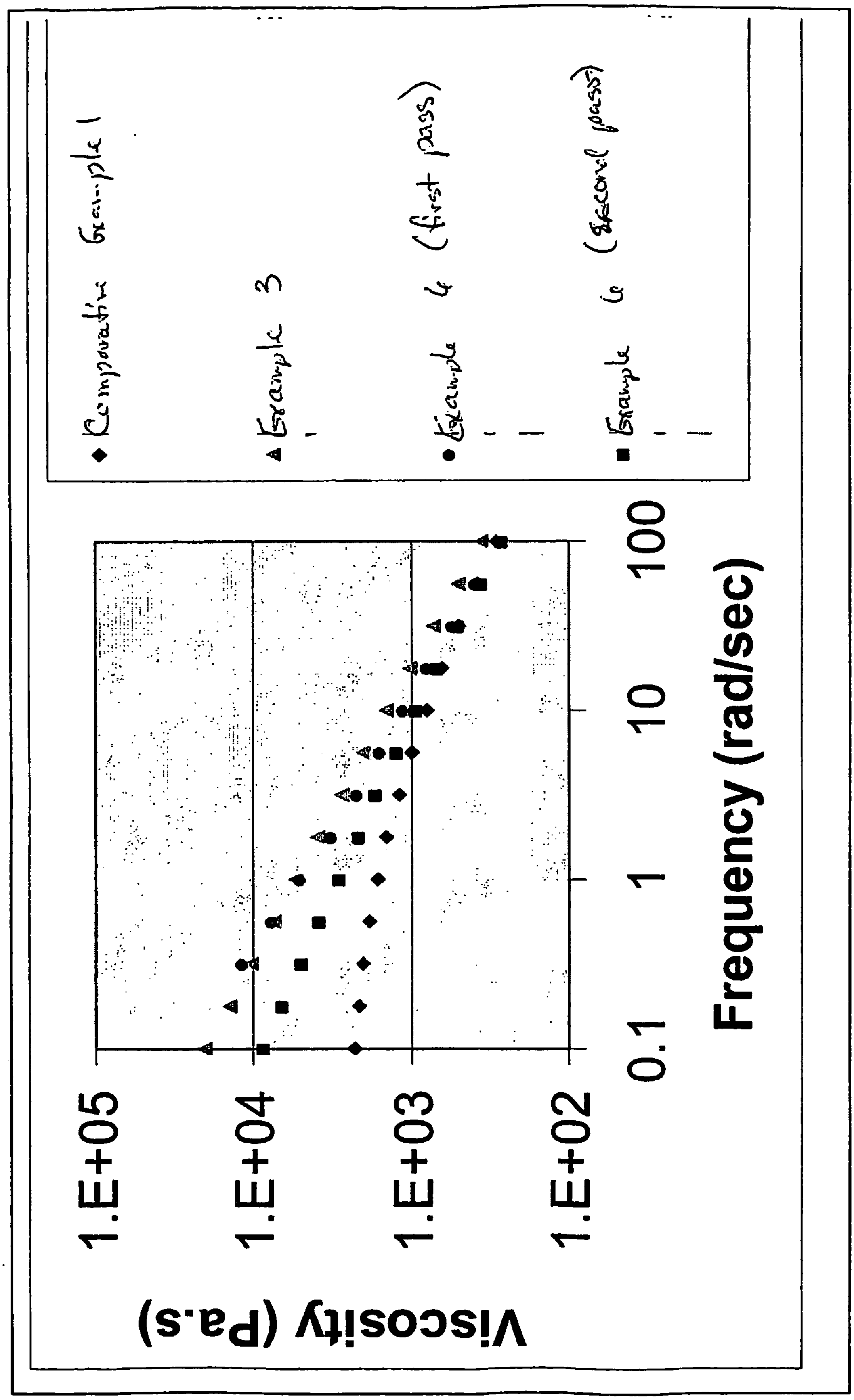
Viscosity (Pa.s)
1.E+05
1.E+04
1.E+03
1.E+02
0.1
1
10
100
Frequency (rad/sec)
Comparative Example 1
Example 3
Example 4 (first pass)
Example 6 (second pass)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 10046024
- WO 02092561 A
- US 5272236 A
- US 5278272 A
- US 10139786 B
- WO 2003040442 A
- US 4666987 A
- US 4572819 A
- US 4585825 A
- US 3123655 A
- US 3346520 A
- US 3639522 A
- US 4409369 A